# EUROPÄISCHE PATENTSCHRIFT

(11) **EP 3 026 238 B1**
(45) Veröffentlichungstag und Bekanntmachung des Hinweises auf die Patenterteilung: **22.12.2021**
(21) Anmeldenummer: 15189258.5
(22) Anmeldetag: 12.10.2015
(51) Int. Cl.: F02B 37/12, F02C 6/12, F02B 37/24, F02B 37/22, F02B 37/18, F01D 17/10, F01D 17/16

(54) **BRENNKRAFTMASCHINE MIT EINEM ABGASTURBOLADER**
COMBUSTION ENGINE WITH A TURBOCHARGER
MOTEUR À COMBUSTION INTERNE AVEC UN TURBOCOMPRESSEUR

(30) Priorität: 12.11.2014 DE 102014223044
(43) Veröffentlichungstag der Anmeldung: 01.06.2016
(73) Patentinhaber: Volkswagen Aktiengesellschaft, 38440 Wolfsburg (DE)
(72) Erfinder: Kammeyer, Jasper, 30169 Hannover (DE); Hinrichs, Oliver, 31226 Peine (DE); Alberti, Dr.-Ing. Peter, 38553 Wasbüttel (DE); Bartolome, Javier, 38106 Braunschweig (DE)
(74) Vertreter: Bungartz, Florian

(56) Entgegenhaltungen:
- DE-A1-102004 033 185
- DE-A1-102004 051 889
- DE-A1-102010 027 521
- DE-A1-102011 111 747
- DE-A1-102013 003 418
- DE-U1-202014 102 773

## Beschreibung

Die Erfindung betrifft eine einen Abgasturbolader umfassende Brennkraftmaschine.

Die Verwendung eines oder mehrerer Abgasturbolader zur Erhöhung der spezifischen Leistung und zur Senkung des spezifischen Kraftstoffverbrauchs von Brennkraftmaschinen ist bekannt.

Abgasturbolader weisen eine in einen Abgasstrang der Brennkraftmaschine integrierte Turbine mit einem Turbinenlaufrad sowie einen in den Frischgasstrang der Brennkraftmaschine integrierten Verdichter mit einem Verdichterlaufrad auf. Das Turbinenlaufrad und das Verdichterlaufrad sind über eine Welle verbunden. Im Betrieb der Brennkraftmaschine wird das Turbinenlaufrad von der Abgasströmung angeströmt und dadurch rotierend angetrieben, wobei diese Rotation über die Welle auf das Verdichterlaufrad übertragen wird. Die so bewirkte Rotation des Verdichterlaufrads erzeugt die gewünschte Verdichtung des Frischgases.

Sowohl die Turbine als auch der Verdichter eines Abgasturboladers weisen einen von dem Massenstrom des durch sie hindurch strömenden Gases abhängigen Wirkungsgrad auf. Die Geometrie der strömungsführenden Räume sowie der Laufräder sollte so ausgelegt werden, dass ein ausreichend guter Wirkungsgrad für alle im Betrieb auftretenden Massenströme erreicht wird. Gleichzeitig wird regelmäßig versucht, in einem oder mehreren enger definierten Betriebsbereichen der Brennkraftmaschine den höchstmöglichen Wirkungsgrad für die Turbine und den Verdichter zu erzielen. Bei Diesel-Brennkraftmaschinen ist typischerweise vorgesehen, im Teillastbetrieb des Verbrennungsmotors einen möglichst hohen Wirkungsgrad des Abgasturboladers zu erreichen.

Bei der Auslegung einer Turbine eines Abgasturboladers sollte ein bestmöglicher Kompromiss zwischen dem Ansprechverhalten, dem Verhalten bei Teillastbetrieb und dem Verhalten im Nennleistungsbetrieb der Brennkraftmaschine gefunden werden. Für ein gutes Ansprech- und Teillastverhalten sollten bereits kleine Abgasmassenströme (und damit Abgasenthalpieströme) gute Wirkungsgrade und spezifisch hohe Turbinenleistungen bewirken. Dies kann prinzipiell durch eine geometrische Auslegung der Turbine mit relativ geringer Baugröße und entsprechend geringem Massenträgheitsmoment des Turbinenlaufrads erreicht werden. In einem Betrieb der Brennkraftmaschine mit Nennleistung sollte dagegen möglichst der gesamte Abgasmassenstrom bei einem moderaten Druckverhältnis durch die Turbine geleitet werden können. Dies erfordert prinzipiell eine geometrische Auslegung der Turbine mit einer relativ großen Baugröße. Dieser Zielkonflikt bedingt in der Praxis einen Kompromiss bei der geometrischen Auslegung der Turbine, um einen Betrieb des Abgasturboladers über den gesamten Betriebsbereich der Brennkraftmaschine zu ermöglichen. Parameter für die Auslegung einer Turbine eines Abgasturboladers betreffen in der Regel die Volute des Turbinengehäuses, dabei insbesondere deren Querschnittsfläche, den Umfangsverlauf der Querschnittsfläche und das A/R-Verhältnis, sowie das Turbinenlaufrad, dabei insbesondere dessen Durchmesser, die aerodynamische Ausführung und den Trimm.

Um eine Überdrehzahl der Turbine und damit auch des Verdichters des Abgasturboladers infolge zu hoher Abgasmassenströme zu verhindern können zudem Regelvorrichtungen eingesetzt werden.

Von mittels Abgasturbolader aufgeladenen Ottomotoren ist zum einen die Verwendung eines sogenannten Wastegates als Regelvorrichtung bekannt. Hierbei handelt es sich um einen die Turbine umgehenden Bypass für das Abgas, der mittels eines Bypassventils regelbar ist. Bei einem zu hohen Abgasmassenstrom wird ein Teil des Abgases mittels des Wastegates an der Turbine vorbeigeführt und dadurch die in der Turbine in mechanische Energie umgesetzte Abgasenthalpie begrenzt.

Bei Dieselmotoren ist dagegen die Verwendung von Abgasturboladern mit variabler Turbinengeometrie (VTG) verbreitet, bei der zumeist verstellbare Leitschaufeln eingangsseitig der Turbine angeordnet sind. Durch eine angepasste Verstellung der Leitschaufeln wird zum einen der freie Strömungsquerschnitt im Eintrittskanal der Turbine verändert, wodurch insbesondere bei niedrigen Abgasmassenströmen die Strömungsgeschwindigkeit beim Eintritt in den das Turbinenlaufrad aufnehmenden Laufradraum erhöht werden kann. Zum anderen kann der Winkel der Anströmung der Schaufeln des Turbinenlaufrads angepasst werden, was ebenfalls eine Erhöhung des Turbinenwirkungsgrads bringen kann.

In dem Verdichter eines Abgasturboladers wird das über den Frischgasstrang dem Verbrennungsmotor zugeführte Frischgas verdichtet. Dabei ist die Druckanhebung von der Drehzahl des Verdichterlaufrads sowie von dem Massenstrom des über das Laufrad geführten Frischgases abhängig. In Richtung der sogenannten Pumpgrenze des Verdichterkennfelds erfolgt die Anströmung der Eintrittskanten der Laufradschaufeln infolge der gegenüber der Umfangsgeschwindigkeit abnehmende Anströmgeschwindigkeit zunehmend druckseitig, d.h. die Inzidenz der Anströmung nimmt stetig zu. Ab einem betriebspunktabhängigen Grenzwert der Inzidenz, der sogenannten Pumpgrenze, löst die Strömung an den Eintrittskanten ab und die Strömung im Verdichter wird instabil. Im Bereich der Pumpgrenze bildet sich im Bereich der Gehäusekontur des Verdichters ein Rückströmgebiet impulsarmen Fluids. Diese sogenannte Rückströmblase führt durch Drall- und Mischungsverluste in Richtung der Pumpgrenze zu einem Abfall des Verdichterwirkungsgrads. Im Bereich der Nabenkontur des Laufrads verläuft aber auch nahe der Pumpgrenze eine relativ impulsreiche und verlustarme Kernströmung durch den Verdichter, die den Massendurchsatz und den Druckaufbau bestimmt.

Ein sogenannter Trimsteller dient der Verschiebung der Pumpgrenze eines Verdichters in Richtung niedrigerer Massenströme bei hohen Druckverhältnissen. Gleichzeitig kann ein Trimsteller im Bereich der Pumpgrenze einen Anstieg des Verdichterwirkungsgrads bewirken. Hierzu umfasst ein Trimsteller eine Vorrichtung, durch die der Anströmquerschnitt, in dem das Laufrad des Verdichters angeströmt wird, veränderbar ist. Durch die so erreichte Düsenwirkung des Trimstellers kann mit zunehmendem Regeleingriff (Verkleinerung des Anströmquerschnitts) die Verdichteranströmung stärker auf den nabennahen Strömungsquerschnitt des Verdichterlaufrads fokussiert werden. Dadurch strömt weniger Fluid in den impulsarmen und verlustbehafteten Bereich der Rückströmblase und die Kernströmung im nabennahen Bereich wird beschleunigt und dadurch zusätzlich stabilisiert. Die Beschleunigung der Strömung im nabennahen Bereich des Verdichters hat zusätzlich eine saugseitige Verschiebung der Verdichteranströmung zur Folge, was zu einer weiteren Stabilisierung der Strömung beitragen kann. Die Stabilisierung der Kernströmung führt zu der gewünschten Verschiebung der Pumpgrenze des Verdichterkennfelds zu geringeren Massenströmen des Abgases. Bei nicht gewünschtem Regeleingriff (Trimsteller vollständig geöffnet) wird möglichst der gesamte Querschnitt des Frischgasstrangs vor dem Verdichter freigegeben, so dass in der Verdichteranströmung möglichst keine zusätzlichen Reibungs- oder Drosselverluste entstehen. Der Verdichterwirkungsgrad und die Breite des Verdichterkennfelds werden deshalb in Richtung der Stopfgrenze nicht im relevanten Ausmaß durch den Trimsteller negativ beeinflusst.

Durch die Verschiebung der Pumpgrenze und den gleichzeitigen Anstieg des Verdichterwirkungsgrads mittels eines Trimstellers können das dynamische Ansprechverhalten sowie der Teillastbetrieb von aufgeladenen Brennkraftmaschinen verbessert werden. Durch den verbesserten Systemwirkungsgrad lässt sich der Abgasgegendruck im Teillastbereich absenken, wodurch der Verbrauch der Brennkraftmaschine sinkt. Durch den Wirkungsgradanstieg und die Verschiebung der Pumpgrenze kann das maximale Motordrehmoment bereits bei niedrigeren Motordrehzahlen erreicht und somit das transiente Ansprechverhalten der Brennkraftmaschine verbessert werden.

Ein Trimsteller für einen Verdichter ist beispielsweise aus der DE 102010 026 176 A1 bekannt.

Eine weitere Möglichkeit, den Wirkungsgrad und damit auch das Ansprechverhalten eines Abgasturboladers zu verbessern, kann darin bestehen, zwei oder mehr Abgasturbolader (gegebenenfalls auch mechanisch oder elektrisch angetriebene Verdichter) bei einer Brennkraftmaschine vorzusehen, wobei diese für unterschiedliche Betriebsbereiche eines Verbrennungsmotors der Brennkraftmaschine ausgelegt und auch nur oder primär in diesen Betriebsbereichen für die Verdichtung des Frischgases verantwortlich sind.

Die US 2007/151,243 A1 und die DE 20 2005 022 022 U1 offenbaren beispielsweise jeweils verschiedene Ausgestaltungen doppelt aufgeladener Brennkraftmaschinen mit zwei in Serie oder parallel geschalteten Abgasturboladern, die zumindest zwei Freiheitsgrade aufweisen. Diese Druckschriften befassen sich dabei mit einer möglichst optimalen Abstimmung der zwei Abgasturbolader aufeinander mittels der mindestens zwei Freiheitsgrade mit dem Ziel einer möglichst optimalen Gesamtwirkung hinsichtlich des Betriebsverhaltens der Brennkraftmaschine. Als mögliche Freiheitsgrade für die Turbinen und Verdichter der beiden Abgasturbolader werden variable Turbinengeometrien, variable Verdichtergeometrien sowie Wastegates für die Turbinen oder Verdichter genannt.

Die DE 10 2004 051 889 A1 offenbart eine Brennkraftmaschine mit einem Abgasturbolader. Dieser umfasst eine VTG-Turbine und einen Verdichter. Ein Verdichterlaufrad des Verdichters kann entweder axial über einen Einlasskanal oder über einen Zusatzkanal mit Frischgas, das aus einem Luftsammelraum stammt, angeströmt werden kann. Eine Anströmung des Verdichterlaufrads mittels über den Zusatzkanal zugeführtem Frischgases erfolgt dabei in radialer Richtung. Mittels eines verschiebbaren Sperrorgans besteht die Möglichkeit einer variablen Verteilung des aus dem Luftsammelraum stammenden Frischgases auf den Einlasskanal und den Zusatzkanal. Bei einer Anströmung des Verdichterlaufrads mit über den Zusatzkanal geführtem Frischgas soll in vorteilhafter Weise ein sogenannter Kaltluft-Turbinenbetrieb realisiert werden, bei dem ein Strömungsgefälle über dem Verdichter herrscht und das Verdichterlaufrad durch dieses Strömungsgefälle zusätzlich rotierend angetrieben wird, um bei einem Betrieb der Brennkraftmaschine im unteren Last-/Drehzahlbereich eine ausreichende Mindestdrehzahl des Laufzeugs (Verdichter- und Turbinenlaufrad) sicherzustellen.

Die DE 10 2004 033 185 A1 beschreibt eine Steuerung der Menge des über einen Bypasskanal geführten Abgasstroms bei einem Abgasturbolader für eine Brennkraftmaschine mittels eines auf einem Drehschieber beruhenden Bypassventils.

Und schließlich ist in der DE 10 2010 027 521 A1 ein Verfahren zur Steuerung eines sequentiellen Turboladers in zweistufiger Reihenanordnung unter Verwendung einer Bypassventil-Leckagesteuerung beschrieben.

Ausgehend von diesem Stand der Technik lag der Erfindung die Aufgabe zugrunde, einen Abgasturbolader für eine Brennkraftmaschine anzugeben, der sich durch einen möglichst optimalen Betrieb im gesamten Betriebsbereich der Brennkraftmaschine auszeichnet.

Diese Aufgabe wird durch eine Brennkraftmaschine mit einem Abgasturbolader gemäß dem Patentanspruch 1 gelöst. Vorteilhafte Ausgestaltungen der erfindungsgemäßen Brennkraftmaschine sind Gegenstände der abhängigen Patentansprüche und ergeben sich aus der nachfolgenden Beschreibung der Erfindung.

Der Erfindung liegt die Erkenntnis zugrunden, dass bei der Auslegung eines Abgasturboladers als Gesamtvorrichtung ein Leistungsgleichgewicht zwischen Turbine und Verdichter im Fokus stehen sollte. Diesem Auslegungsziel kann eine grundsätzlich vorteilhafte Erweiterung des Verdichterkennfelds mittels eines Trimstellers entgegenwirken, da dadurch Betriebsbereiche für den Verdichter geschaffen werden, für die die Leistungsfähigkeit der dazugehörigen Turbine nicht ausreichend sein kann. Demnach würde der tatsächliche Betriebsbereich des Verdichters nicht mehr durch dessen Pumpgrenze sondern durch die bei niedrigen Abgasmassenströmen zur Verfügung stehende (zu geringe) Turbinenleistung begrenzt.

Grundgedanke der Erfindung ist, durch eine angepasste Auslegung der Turbine des Abgasturboladers, die durch den Trimsteller ermöglichte Erweiterung des Verdichterkennfelds tatsächlich nutzbar zu machen, wobei durch eine regelbare Ausgestaltung der Turbine eine Überbelastung der Turbine und damit des Abgasturboladers bei hohen Abgasmassenströmen verhindert wird.

Eine erfindungsgemäße Brennkraftmaschine ist durch die Integration eines Abgasturboladers gekennzeichnet, der zumindest eine Turbine, einen Radialverdichter, der in axialer Richtung bezogen auf eine Rotationsachse eines Verdichterlaufrads angeströmt und in radialer Richtung abgeströmt wird, und einen Trimsteller umfasst, wobei mittels des Trimstellers ein Anströmquerschnitt, mit dem das Verdichterlaufrad axial angeströmt wird, aktiv (durch eine Ansteuerung des Trimstellers mittels einer Steuervorrichtung) veränderbar ist. Weiterhin ist die Turbine mittels einer VTG-Vorrichtung und mittels eines Wastegates regelbar. Eine solche Brennkraftmaschine kann weiterhin mindestens einen Verbrennungsmotor, einen Frischgasstrang, über den dem Verbrennungsmotor Frischgas zugeführt wird und der den Verdichter des Abgasturboladers integriert, sowie einen Abgasstrang, über den Abgas, das durch eine Verbrennung von in einem oder mehreren Brennräumen des Verbrennungsmotors mit dem Frischgas verbrannten Kraftstoffs entsteht, von dem Verbrennungsmotor abgeführt werden kann und in den die Turbine des Abgasturboladers integriert ist, umfassen.

Als "VTG-Vorrichtung" wird erfindungsgemäß eine Vorrichtung verstanden, durch die ein oder mehrere Strömungsquerschnitte in der Turbine aktiv (durch eine Ansteuerung der VTG-Vorrichtung mittels einer Steuervorrichtung) veränderbar sind. Insbesondere kann mittels der VTG-Vorrichtung ein Anströmquerschnitt, mit dem ein Laufrad der Turbine angeströmt wird, veränderbar sein.

Als "Wastegate" wird erfindungsgemäß ein mittels eines Ventils regelbarer (d.h. mindestens zu öffnender und zu verschließender) Bypass zur bedarfsweisen Umgehung der Turbine des Abgasturboladers verstanden.

Erfindungsgemäß umfasst der Abgasturbolader sowohl eine VTG-Vorrichtung als auch ein Wastegate. Dadurch kann eine besonders gute Anpassung der Betriebskennfelder des Verdichters und der Turbine aufeinander erfolgen. Insbesondere kann dadurch erreicht werden, dass die Beeinflussung des Betriebskennfelds der Turbine mittels der VTG-Vorrichtung primär einer Optimierung des Wirkungsgrads des Abgasturboladers in einem definierten Teillastbereich im Betriebskennfeld der Brennkraftmaschine dient, während eine Überbelastung bei hohen Abgasmassenströmen, wie sie insbesondere bei einem Betrieb im Bereich der Nennleistung der Brennkraftmaschine erfolgt, durch das Wastegate verhindert wird. Erfindungsgemäß wird demnach bei einem Betrieb der Brennkraftmaschine mit Nennleistung ein Teil des dann größten Abgasmassenstroms über das Wastegate an der Turbine vorbeigeführt. Dabei kann derjenige Bereich im Betriebskennfeld der Brennkraftmaschine, in dem das Wastegate aktiv (d.h. zumindest teilweise geöffnet) ist und/oder die über das Wastegate geführte maximale Teilmenge des Abgasmassenstroms relativ klein gehalten werden, da mittels der VTG-Vorrichtung das Betriebskennfeld der Turbine nicht nur hinsichtlich eines definierten Bereichs optimiert sondern auch insgesamt verbreitert werden kann. Der in der Turbine nicht genutzte Anteil der Abgasenthalpie kann dadurch entsprechend gering gehalten werden. Vorgesehen ist, dass bei einer erfindungsgemäßen Brennkraftmaschine der infolge der Dimensionierung des Wastegates maximal durch das Wastegate führbare Massenstrom lediglich zwischen 5% und 30%, vorzugsweise höchstens 20% des maximal durch die Turbine führbaren Gesamtmassenstroms des Abgases entspricht.

Die erfindungsgemäße Ausgestaltung des Abgasturboladers eignet sich besonders vorteilhaft zur Verwendung in Kombination mit einem als Dieselmotor ausgebildeten Verbrennungsmotor der erfindungsgemäßen Brennkraftmaschine. Ein Dieselmotor weist nämlich gegenüber einem Ottomotor Wirkungsgrad- und damit Verbrauchsvorteile insbesondere im Teillastbetrieb auf und ist daher in der Regel für einen möglichst häufigen und lang andauernden Teillastbetrieb vorgesehen. Die erfindungsgemäß ermöglichte Optimierung des Wirkungsgrads des Abgasturboladers in insbesondere diesem Teillastbetrieb wirkt sich folglich entsprechend vorteilhaft auf den Kraftstoffverbrauch der Brennkraftmaschine aus.

Die Aktivierung des Wastegates führt dazu, dass ein Teil der Abgasenthalpie einer Nutzung in der Turbine nicht zugeführt wird. Dies muss jedoch nicht zwangsläufig zu einem verminderten Wirkungsgrad für den sowohl eine VTG-Vorrichtung als auch ein Wastegate aufweisenden Abgasturbolader und für eine erfindungsgemäße Brennkraftmaschine führen. Eine Turbine mit VTG-Vorrichtung wird nämlich vorteilhafterweise derart ausgelegt, dass diese den höchsten Wirkungsgrad in einer mittleren Regelstellung der VTG-Vorrichtung erreicht, in der folglich der freie Strömungsquerschnitt in der Turbine durch die VTG-Vorrichtung weder weitestmöglich verschlossen noch weitestmöglich freigegeben ist.

Durch die Kombination einer VTG-Vorrichtung und eines Wastegates bei dem Abgasturbolader einer erfindungsgemäßen Brennkraftmaschine kann vorgesehen sein, dass die VTG-Vorrichtung bei aktiviertem Wastegate mittels einer Steuervorrichtung (insbesondere der Motorsteuerung) der Brennkraftmaschine in eine Regelstellung gestellt wird, in der diese den freien Strömungsquerschnitt nicht weitestmöglich freigibt. Dies ist erfindungsgemäß zumindest bei einem Betrieb der Brennkraftmaschine mit Nennleistung vorgesehen. Durch ein gegebenenfalls nur geringes Verstellen der VTG-Vorrichtung von der den Strömungsquerschnitt weitestmöglich freigebenden Stellung in diese Regelstellung kann eine erhebliche Verbesserung des Turbinenwirkungsgrads erreicht werden, die die Nichtnutzung der Abgasenthalpie des über das Wastegate geführten Teilstroms des Abgasmassenstroms (über-)kompensieren kann. Das durch die teilweise verschließende Regelstellung verminderte Schluckvermögen der Turbine kann dabei durch das Vorbeiführen des Teilstroms des Abgasmassenstroms an der Turbine über das Wastegate kompensiert werden.

Das Wastegate des Abgasturboladers kann vorteilhafterweise derart ausgebildet sein, dass ein oder mehrere Bypasskanäle, die insbesondere in ein Gehäuse des Abgasturboladers integriert sind, mittels eines Drehschieberventils des Wastegates in Abhängigkeit von der jeweiligen Regelstellung des Wastegates mehr oder weniger verschließbar sind. Eine solche Ausgestaltung kann sich insbesondere positiv auf den für das Wastegate benötigten Bauraum auswirken. Zudem kann sich ein solches Drehschieberventil durch geringe Betätigungskräfte auszeichnen. Dies ermöglicht, einen zur Verstellung des Drehschieberventils genutzten Aktor entsprechend klein zu dimensionieren, was Vorteile hinsichtlich der Kosten und des Bauraums mit sich bringen kann.

Sofern für ein solches Wastegate lediglich ein einzelnes Drehschieberventil vorgesehen ist, kann dies vorzugsweise am Auslass des oder der Bypasskanäle angeordnet sein, weil dort die Temperatur des bereits bei der Durchströmung des Turbinenlaufrads entspannten Abgases verringert ist, was folglich zu einer entsprechend geringeren thermischen Belastung des Drehschieberventils führt.

Die erfindungsgemäße Ausgestaltung einer Brennkraftmaschine ermöglicht, den Abgasturbolader in einem so großen Bereich möglichst optimal an das Betriebskennfeld des Verbrennungsmotors der Brennkraftmaschine anzupassen, wie dies bislang allenfalls durch die Verwendung einer mehrfachen Aufladung möglich war. Aus Kosten- und Bauraumgründen vorteilhaft kann daher vorgesehen sein, dass die erfindungsgemäße Brennkraftmaschine lediglich einen Abgasturbolader umfasst. Besonders bevorzugt ist sogar nur eine einfache Aufladung für die Brennkraftmaschine vorgesehen, so dass der Abgasturbolader auch nicht mit einer anderen Art von Aufladevorrichtung, wie beispielsweise einem mechanisch angetriebenen Verdichter ("Kompressor") oder einem elektrisch angetriebenen Verdichter ("Booster") kombiniert ist.

Bei der Turbine des Abgasturboladers einer erfindungsgemäßen Brennkraftmaschine kann es sich insbesondere um eine Radialturbine handeln. Die Verwendung einer Axial- oder sogenannten Mixed-Flow-Turbine ist aber ebenfalls möglich.

Die erfindungsgemäße Brennkraftmaschine kann insbesondere für den Antrieb eines Kraftfahrzeugs, insbesondere radbasierten Kraftfahrzeugs (z.B. PKW und/oder LKW) vorgesehen sein.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die vorliegende Erfindung wird nachfolgend anhand von in den Zeichnungen dargestellten Ausführungsbeispielen näher erläutert. In den Zeichnungen zeigt:
- Fig. 1:: eine Ausgestaltung einer Brennkraftmaschine in einer schematischen Darstellung;
- Fig. 2:: eine Ausgestaltung einer erfindungsgemäßen Brennkraftmaschine in einer schematischen Darstellung;
- Fig. 3:: in einem Diagramm ein Verdichterkennfeld eines konventionellen Abgasturboladers und ein Verdichterkennfeld des Abgasturboladers einer erfindungsgemäßen Brennkraftmaschine sowie dazugehörige Volllast-Motorkennlinien einer konventionellen Brennkraftmaschine sowie von Brennkraftmaschinen gemäß den Fig. 1 und 2;
- Fig. 4:: den Volllast-Motorkennlinien der Fig. 3 entsprechende Verläufe des von den Brennkraftmaschinen erzeugten Drehmoments über der Drehzahl;
- Fig. 5:: eine Ausgestaltung eines Trimstellers für einen Abgasturbolader einer erfindungsgemäßen Brennkraftmaschine;
- Fig. 6:: eine Ausgestaltung einer VTG-Vorrichtung für einen Abgasturbolader einer erfindungsgemäßen Brennkraftmaschine;
- Fig. 7:: eine erste Ausgestaltung eines Wastegates für einen Abgasturbolader einer erfindungsgemäßen Brennkraftmaschine;
- Fig. 8:: eine zweite Ausgestaltung eines Wastegates für einen Abgasturbolader einer erfindungsgemäßen Brennkraftmaschine; und
- Fig. 9:: eine Vorderansicht des Drehschieberventils des Wastegates gemäß der Fig. 8.

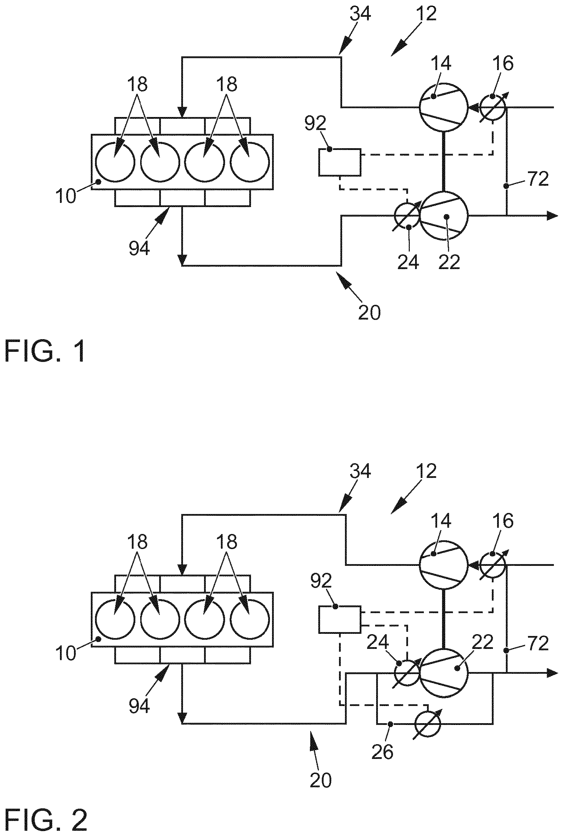

Die Fig. 1 zeigt in schematischer Darstellung eine Ausgestaltung einer Brennkraftmaschine. Die Brennkraftmaschine umfasst einen vorzugsweise als Dieselmotor ausgebildeten Verbrennungsmotor 10, dem über einen Frischgasstrang 12 Frischgas zugeführt wird. In den Frischgasstrang 12 ist ein Verdichter 14 eines Abgasturboladers integriert. Der Verdichter 14 umfasst einen Trimsteller 16. Der Abschnitt des Frischgasstrangs12, der sich zwischen dem Verdichter 14 und dem Verbrennungsmotor 10 erstreckt, wird als Ladeluftstrecke 34 bezeichnet.

In von Zylindern, darin geführten Kolben und einem Zylinderkopf (nicht dargestellt) des Verbrennungsmotors 10 begrenzten Brennräumen 18 wird direkt eingespritzter Kraftstoff mit dem Frischgas verbrannt. Das dabei entstehende Abgas wird über einen Abgasstrang 20 abgeführt. In den Abgasstrang 20 ist eine Turbine 22 des Abgasturboladers integriert. Die Turbine 22 ist mittels einer VTG-Vorrichtung 24 regelbar.

Bei der in der Fig. 2 dargestellten Ausgestaltung einer erfindungsgemäßen Brennkraftmaschine umfasst der Abgasturbolader zusätzlich noch ein Wastegate 26.

Der Trimsteller 16, die VTG-Vorrichtung 24 und gegebenenfalls das Wastegate 26 sind jeweils über eine Steuervorrichtung 92 (Motorsteuerung) der Brennkraftmaschine ansteuerbar.

Die Brennkraftmaschine gemäß den Fig. 1 und 2 können optional auch eine Niederdruck-Abgasrückführung 72 umfassen, über die ein Teil des Abgases stromab aus dem Abgasstrang 20 abgezweigt und stromauf des Verdichters 14 in den Frischgasstrang 12 überführt werden kann.

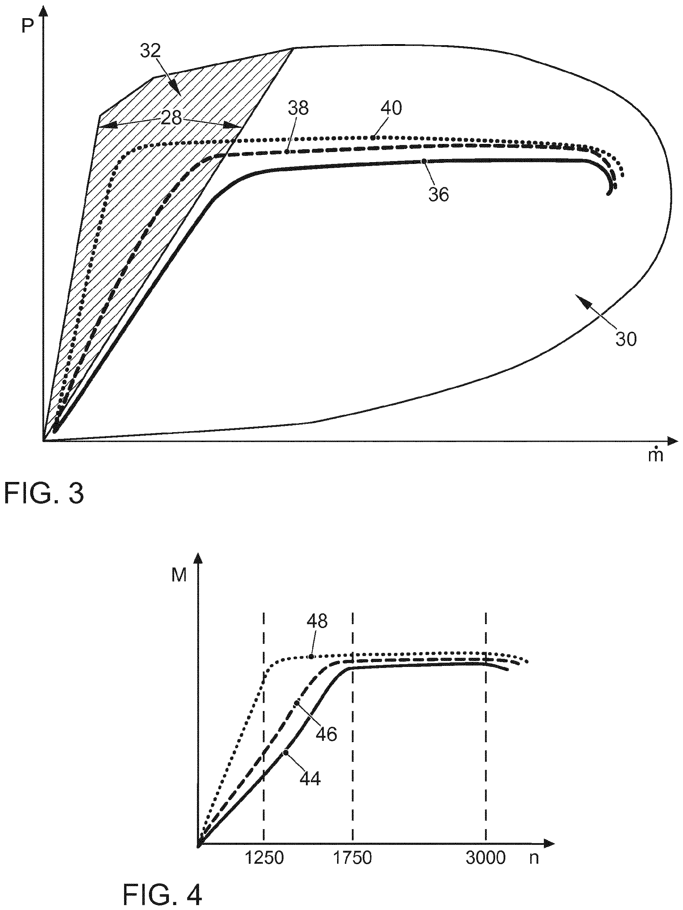

In den Fig. 3 und 4 sind die durch die erfindungsgemäße Ausgestaltung einer Brennkraftmaschine gemäß der Fig. 2 erzielbaren Verbesserungen hinsichtlich des Ladedrucks p des dem Verbrennungsmotor 10 zugeführten Frischgases (vgl. Fig. 3) und des von dem Verbrennungsmotor 10 erzeugten Drehmoments M in Abhängigkeit von der Drehzahl n einer Kurbelwelle (nicht dargestellt) des Verbrennungsmotors 10 im Vergleich zu einer vergleichbaren Brennkraftmaschine, deren Abgasturbolader einen Verdichter ohne Trimsteller und eine Turbine mit lediglich einer VTG-Vorrichtung umfasst, und im Vergleich zu einer Brennkraftmaschine gemäß der Fig. 1 gezeigt.

In dem Diagramm der Fig. 3 ist dargestellt, dass die Pumpgrenze 28 des Verdichterkennfelds 30, das den von dem jeweiligen Verdichter 14 erzeugbaren Ladedruck p (auf der Vertikalachse) über dem durch den jeweiligen Verdichter 14 geführten Frischgasmassenstrom ṁ aufträgt, durch die Kombination eines Verdichters 14 mit einem Trimsteller 16 gemäß den Fig. 1 und 2 in Richtung niedrigerer Frischgasmassenströme ṁ verschoben werden kann und dadurch das Verdichterkennfeld 30 insgesamt um den Erweiterungsbereich 32 vergrößert werden kann.

Bei der konventionellen Brennkraftmaschine, deren Verdichter keinen Trimsteller aufweist, wird der in der Ladeluftstrecke erzeugbare Ladedruck p des Frischgases im Wesentlichen durch die Pumpgrenze 28 des Verdichters begrenzt. Dies ist anhand der mit durchgezogenem Strich gezeigten Volllast-Motorkennlinie 36 für diese konventionelle Brennkraftmaschine gezeigt.

Die Verschiebung der Pumpgrenze 28 in Richtung geringerer Frischgasmassenströme ṁ mittels des Trimstellers 16 ermöglicht einen im Vergleich zur konventionellen Brennkraftmaschine erhöhten Ladedruck p, insbesondere bei relativ geringen Frischgasmassenströmen ṁ, und folglich einen Verlauf der entsprechenden Volllast-Motorkennlinien 38, 40 in dem Erweiterungsbereich 32 des Verdichterkennfelds 30. Bei der Brennkraftmaschine gemäß der Fig. 1, bei der die Turbine 22 des Abgasturboladers lediglich eine VTG-Vorrichtung 24 umfasst, ist dabei das volle Potenzial der Erweiterung des Verdichterkennfelds 30 nicht immer nutzbar (vgl. entsprechende gestrichelte Volllast-Motorkennlinie 38), weil eine dafür erforderliche Verkleinerung der Turbine 22, die zu einer entsprechend geringeren Massenträgheit des dazugehörigen Turbinenlaufrads 42 führt, nicht oder nur in relativ kleinem Umfang umsetzbar ist, damit weiterhin ein Durchsatz des größten im Betrieb der Brennkraftmaschine erzeugten Abgasmassenstroms durch die Turbine 22 gewährleistet werden kann.

Diese Auslegungsbeschränkung wird bei der Brennkraftmaschine gemäß der Fig. 2 durch die zusätzliche Integration des Wastegates 26 verhindert, durch das bei einem Betrieb der Brennkraftmaschine im Bereich der Nennleistung ein Teil des dann größten Abgasmassenstroms über das Wastegate 26 an der Turbine 22 vorbeigeführt werden kann. Dies ermöglicht, die Turbine 22 des Abgasturboladers insgesamt relativ klein zu dimensionieren und/oder anderweitig hinsichtlich relativ geringer Abgasmassenströme optimiert auszulegen. Dadurch kann erreicht werden, dass die entsprechende, gepunktete Volllast-Motorkennlinie 40 nah an die verschobene Pumpgrenze 28, die gegenüber der Pumpgrenze 28 bei der konventionellen Brennkraftmaschine in Richtung geringerer Frischgasmassenströme ṁ verschoben ist, verläuft.

Die durch die erfindungsgemäße Ausgestaltung der Brennkraftmaschine gemäß der Fig. 2 erreichbare Erhöhung des Ladedrucks p, insbesondere bei relativ geringen Frischgasmassenströmen ṁ, wirkt sich in im Wesentlichen gleicher Weise auf das von dem Verbrennungsmotor 10 abgegebene Drehmoment M aus, wie dies in der Fig. 4 dargestellt ist. Dort ist der Verlauf des Drehmoments M über der Drehzahl n der Kurbelwelle, jeweils bei Volllast, für die konventionelle Brennkraftmaschine (durchgezogene Kurve 44), für eine Brennkraftmaschine gemäß der Fig. 1 (gestrichelte Kurve 46) sowie für die erfindungsgemäße Brennkraftmaschine gemäß der Fig. 2 (gepunktete Kurve 48) dargestellt. Die erfindungsgemäß erreichbare Erhöhung des Drehmoments M, insbesondere bei relativ niedrigen Drehzahlen n, verbessert die Fahrbarkeit eines von der jeweiligen Brennkraftmaschine angetriebenen Kraftfahrzeugs und ermöglicht zudem eine drehzahlabgesenkte Auslegung des Antriebsstrang des Kraftfahrzeugs, die sich vorteilhaft auf den Kraftstoffverbrauch auswirken kann.

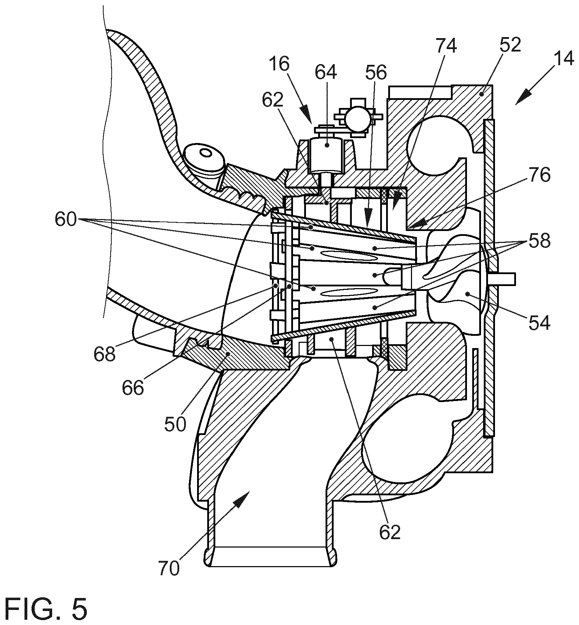

In der Fig. 5 ist die Integration eines Trimstellers 16 in einen Abgasturbolader einer Brennkraftmaschine gemäß der Fig. 1 oder 2 dargestellt. Der Trimsteller 16 umfasst ein Gehäuse 50, das in einer von einem Verdichtergehäuse 52 des Verdichters 14 ausgebildeten Aufnahme unbeweglich angeordnet ist. Der Verdichter 14 ist als Radialverdichter ausgebildet, so dass ein Verdichterlaufrad 54 des Verdichters 14 in axialer Richtung (bezogen auf eine Rotationsachse des Verdichterlaufrads 54) angeströmt und in radialer Richtung abgeströmt wird. Innerhalb des Gehäuses 50 des Trimstellers 16 ist ein trichterförmiges Wandsystem 56 angeordnet, das aus einer Mehrzahl von streifenförmigen Wandelementen 58, 60 ausgebildet ist. Die Wandelemente 58, 60 sind in zwei koaxialen, kreisförmigen Schichten angeordnet und weisen einen U-förmigen Querschnitt auf, d.h. diese umfassen jeweils neben einem streifenförmigen, im Querschnitt teilkreisförmigen Grundabschnitt noch zwei sich davon in etwa in einem rechten Winkel erstreckende Schenkel, wobei die Schenkel der (ersten) Wandelemente 58 der ersten, innen liegenden Schicht radial nach außen gerichtet sind, während die Schenkel der (zweiten) Wandelemente 60 der zweiten, außen liegenden Schicht radial nach innen gerichtet sind. Die Wandelemente 58, 60 jeder der zwei Schichten sind zudem in Umfangsrichtung beabstandet zueinander angeordnet, wobei ein rotatorischer Versatz zwischen den beiden Schichten vorgesehen ist, so dass die Wandelemente 58, 60 jeder Schicht die Zwischenräume der jeweils anderen Schicht überdecken. Dadurch ergibt sich ein im Wesentlichen geschlossenes, trichterförmiges Wandsystem 56. Die Wandelemente 58, 60 der beiden Schichten kontaktieren sich über die vergleichsweise kleinflächigen Längskanten der Schenkel, wodurch ein relativ widerstandsarmes Gleiten der Wandelemente 58, 60 aufeinander erreicht werden kann. Zudem bilden die Schenkel der Wandelemente 58, 60 Endanschläge aus, die ein Aufspreizen des Wandsystems 56 begrenzen.

Ein mehr oder weniger erfolgendes Aufspreizen des auch im vollständig geöffneten Zustand trichterförmigen Wandsystems 56, d.h. ein radiales Verschieben der freien, stromabwärtigen Enden der Wandelemente 58, 60 erfolgt mittels eines Schieberings 62, der die Wandelemente 58, 60 außenseitig umgreift und mittels einer Verstellvorrichtung 64 in Richtung seiner Längsachse verschiebbar ist. Die stromaufwärtigen Enden der Wandelemente 58, 60 sind drehbeziehungsweise verschwenkbar gelagert, so dass die sich durch das radiale Verschieben der freien Enden einstellende Winkeländerung nicht mittels einer Deformation der Wandelemente 58, 60 ausgeglichen wird. Als Lagerelement für die drehbare bzw. wippenartige Lagerung dient ein Lagerring 66, der eine der Anzahl an Wandelementen 58, 60 entsprechende Anzahl an schlitzförmigen Öffnungen aufweist, durch die sich schmale Endabschnitte der Wandelemente 58, 60 erstrecken. Mittels eines Federrings 68, z.B. aus einem Elastomer, wird das Wandsystem 56 in seine vollständig geöffnete Stellung beaufschlagt. Der Federring 68 wird von den Endabschnitten jedes der ersten Wandelemente 58 in etwa halbkreisförmig umgriffen. Infolge der wippenartigen Lagerung der Wandelemente 58, 60 in dem Lagerring 66 führt ein nach innen gerichtetes, radiales Verschieben der freien Enden der Wandelemente 58, 60 zu einem nach außen gerichteten, radialen Verschieben der Endabschnitte und damit zu einer elastischen Umfangsvergrößerung in Verbindung mit einer (zunehmenden) elastischen Vorspannung des Federrings 68.

In dem Verdichtergehäuse 52 verläuft ein Mündungskanal 70, der für einen Anschluss an eine Niederdruck-Abgasrückführung 72 einer erfindungsgemäßen Brennkraftmaschine vorgesehen ist. Der Mündungskanal 70 mündet im Bereich des Wandsystems 56 in das Gehäuse 50 des Trimstellers 16. Aus dem Mündungskanal 70 austretendes Abgas kann sich somit in einem ringförmig das Wandsystem 56 umgebenden Ringraum 74 ausbreiten. Im vollständig geöffneten Zustand des Trimstellers 16 liegen die freien Enden der Wandelemente 58, 60 an einer Kante 76 eines Einlasskanals des Verdichters 14 an. Ein Überströmen des Abgases aus dem Ringraum 74 in den Einlasskanal des Verdichters 14 wird dadurch weitgehend vermieden. Mit zunehmender Verkleinerung des Austrittsquerschnitts des Trimstellers 16 infolge eines Verschiebens der freien Enden der Wandelemente 58, 60 radial nach innen wird ein sich verbreiternder, kreisförmiger Ringspalt freigegeben (vgl. Fig. 5), durch den Abgas aus dem Ringraum 74 in den Verdichter 14 strömen kann.

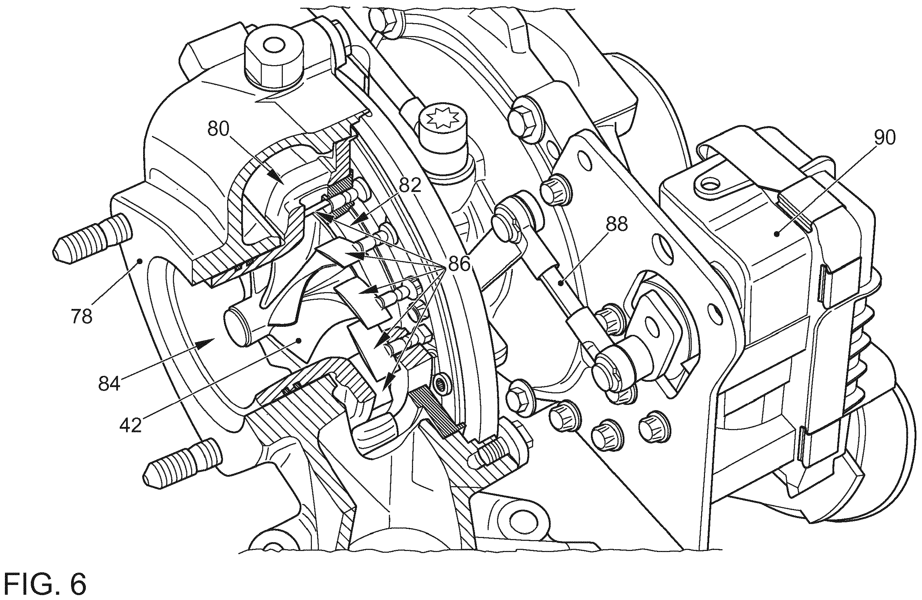

In der Fig. 6 ist die Integration einer VTG Vorrichtung 24 in die Turbine 22 eines Abgasturboladers einer Brennkraftmaschine gemäß der Fig. 1 oder 2 gezeigt. Die Turbine 22 umfasst ein Turbinengehäuse 78 sowie das drehbar innerhalb des Turbinengehäuse 78 angeordnete Turbinenlaufrad 42. Die Turbine 22 ist als Radialturbine ausgebildet, so dass ein Anströmen des Turbinenlaufrads 42 in radialer Richtung und ein Abströmen in axialer Richtung bezüglich einer Rotationsachse des Turbinenlaufrads 42 vorgesehen ist. Dazu wird das Abgas ausgehend von einer das Turbinenlaufrad 42 umgebenden, von dem Turbinengehäuse 78 ausgebildeten Volute 80 über eine oder mehrere Einlässe 82 in den das Turbinenlaufrad 42 aufnehmenden Laufradraum eingelassen. Das Abgas durchströmt dann das Turbinenlaufrad 42, wodurch dieses rotierend angetrieben wird, und wird anschließend über einen axial bezüglich der Rotationsachse des Turbinenlaufrads 42 ausgerichteten Auslasskanal 84 aus dem Turbinengehäuse 78 abgeführt. Im Bereich der Einlässe 82, gegebenenfalls vollumfänglich um das Turbinenlaufrad 42, sind in Umfangsrichtung voneinander beabstandet mehrere Leitschaufeln 86 der VTG-Vorrichtung 24 angeordnet, die jeweils mittels einer Welle verschwenkbar sind und dadurch zum einen den freien Strömungsquerschnitt in den jeweiligen Einlässen 82 und zum anderen die Richtung der Anströmung des Turbinenlaufrads 42 durch das Abgas veränderbar ausgestalten. Die Drehbewegungen der Wellen und damit die Schwenkbewegungen der Leitschaufeln 86 sind über einen rückseitig des Turbinengehäuses 78 angeordneten und in der Fig. 6 nicht sichtbaren Drehring miteinander gekoppelt. Der Drehring selbst kann über einen Hebeltrieb 88 von einem (beispielsweise elektrischen oder pneumatischen) Aktor 90, der von der Steuervorrichtung 92 der Brennkraftmaschine angesteuert wird, verdreht werden, um ein Verstellen der Leitschaufeln 86 zu bewirken.

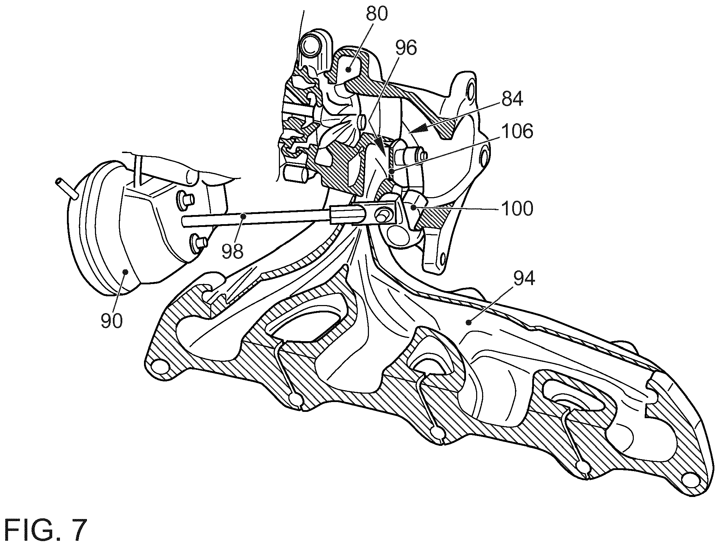

Die Fig. 7 zeigt die mögliche Integration eines Wastegates 26 in die Turbine 22 eines Abgasturboladers einer Brennkraftmaschine gemäß der Fig. 2. Gezeigt ist ein Abgaskrümmer 94 als Teil des Abgasstrangs 20, der den Verbrennungsmotor 10 mit der Volute 80 der Turbine 22 verbindet. In dem Abgaskrümmer 94 wird das aus den Brennräumen 18 kommende Abgas zusammengeführt und der Volute 80 der Turbine 22 zugeführt. Kurz vor dem Übergang in die Volute 80 geht von dem das Abgas führenden Kanal ein Bypasskanal 96 ab, der den Kanal direkt mit dem Auslasskanal 84 stromab des Turbinenlaufrads 42 verbindet. Dieser Bypasskanal 96 ist mittels eines Bypassventils, das im vorliegenden Ausführungsbeispiel als Tellerventil 106 ausgebildet ist, verschließbar. Um den Massenstrom des Abgases durch die Turbine 22 bei einem Betrieb der Brennkraftmaschine im Bereich der Nennleistung zu begrenzen, kann das Bypassventil mittels eines (beispielsweise elektrischen oder pneumatischen) Aktors 90, der über eine Stange 98 und einen Drehhebel 100 mit dem Bypassventil verbunden ist, geöffnet werden. Dadurch strömt ein definierter Teil des Abgasmassenstroms unter Umgehung des Turbinenlaufrads 42 durch den Bypasskanal 96.

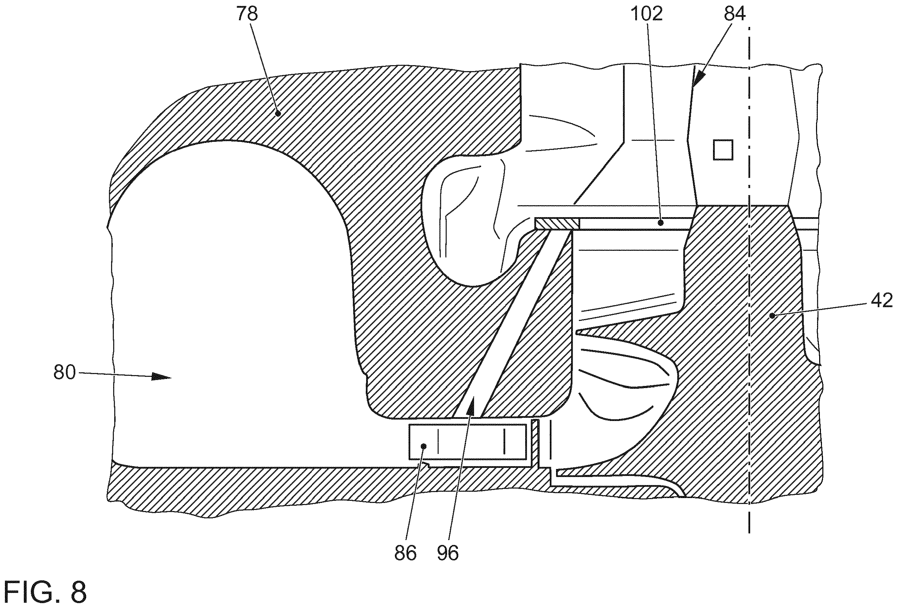

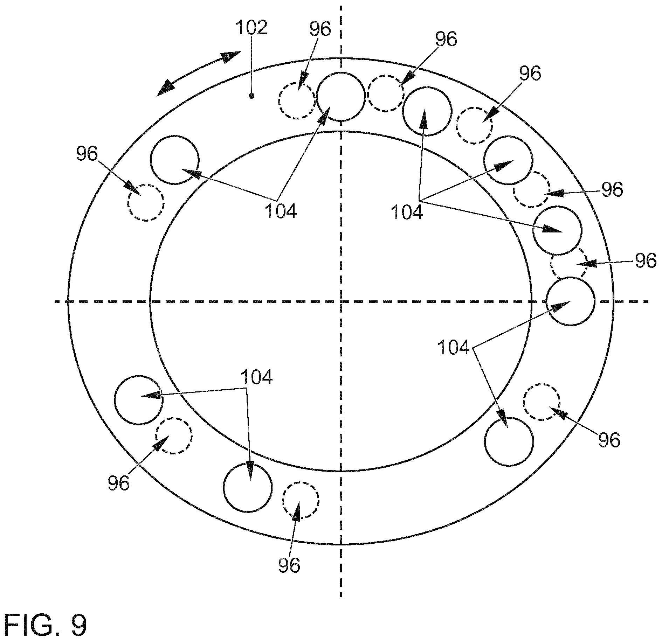

In den Fig. 8 und 9 ist eine alternative Ausgestaltung eines Wastegates 26 für die Turbine 22 eines Abgasturboladers einer Brennkraftmaschine gemäß der Fig. 2 gezeigt. Dort sind in gleichmäßiger oder ungleichmäßiger Teilung um das Turbinenlaufrad 42 herum mehrere Bypasskanäle 96 in das Turbinengehäuse 78 integriert, die die Einlässe 82 mit dem Auslasskanal 84 der Turbine 22 unter Umgehung des Turbinenlaufrads 42 verbinden. Alternativ können die Bypasskanäle auch stromauf der Leitschaufeln 86, d.h. im Bereich der Volute 80 abgehen. Zum bedarfsweisen, mehr oder weniger erfolgenden Verschließen von Auslässen der Bypasskanäle 96 ist innerhalb des Auslasskanals 84 der Turbine 22 ein beispielsweise ringscheibenförmiges Drehschieberventil 102 angeordnet. Dieses Drehschieberventil 102 weist eine der Anzahl der Bypasskanäle 96 entsprechende Anzahl an Durchgangsöffnungen 104 auf, die in einer Öffnungsstellung des Drehschieberventil 102 zudem in Überdeckung mit den Auslässen der Bypasskanäle 96 angeordnet sind. Durch ein Verdrehen des Drehschieberventils 102 ausgehend von dieser Öffnungsstellung erfolgt ein zunehmendes Verschließen der Auslässe der Bypasskanäle 96 durch eine zunehmende Überdeckung mittels des Drehschieberventils 102. Dazu ist das Drehschieberventil 102 ebenfalls mittels eines beispielsweise elektrischen oder pneumatischen Aktors (nicht dargestellt) drehbar.

### Bezugszeichenliste

- 10: Verbrennungsmotor
- 12: Frischgasstrang
- 14: Verdichter
- 16: Trimsteller
- 18: Brennraum
- 20: Abgasstrang
- 22: Turbine
- 24: VTG-Vorrichtung
- 26: Wastegate
- 28: Pumpgrenze
- 30: Verdichterkennfeld
- 32: Erweiterungsbereich des Verdichterkennfelds
- 34: Ladeluftstrecke
- 36: Volllast-Motorkennlinie für die konventionelle Brennkraftmaschine
- 38: Volllast-Motorkennlinie für die Brennkraftmaschine gemäß der Fig. 1
- 40: Volllast-Motorkennlinie für die Brennkraftmaschine gemäß der Fig. 2
- 42: Turbinenlaufrad
- 44: Drehmomentverlauf für die konventionelle Brennkraftmaschine
- 46: Drehmomentverlauf für die Brennkraftmaschine gemäß der Fig. 1
- 48: Drehmomentverlauf für die Brennkraftmaschine gemäß der Fig. 2
- 50: Gehäuse des Trimstellers
- 52: Verdichtergehäuse
- 54: Verdichterlaufrad
- 56: Wandsystem des Trimstellers
- 58: erstes Wandelement
- 60: zweites Wandelement
- 62: Schiebering
- 64: Verstellvorrichtung
- 66: Lagerring
- 68: Federring
- 70: Mündungskanal
- 72: Niederdruck-Abgasrückführung
- 74: Ringraum
- 76: Kante
- 78: Turbinengehäuse
- 80: Volute
- 82: Einlass der Turbine
- 84: Auslasskanal der Turbine
- 86: Leitschaufeln
- 88: Hebeltrieb
- 90: Aktor
- 92: Steuervorrichtung
- 94: Abgaskrümmer
- 96: Bypasskanal
- 98: Stange
- 100: Drehhebel
- 102: Drehschieberventil
- 104: Durchgangsöffnung des Drehschieberventils
- 106: Tellerventil

## Patentansprüche

1. Brennkraftmaschine mit einem Abgasturbolader, der eine Turbine (22), einen Radialverdichter (14), der in axialer Richtung bezogen auf eine Rotationsachse eines Verdichterlaufrads (54) angeströmt und in radialer Richtung abgeströmt wird, und einen Trimsteller (16) für den Radialverdichter (14) umfasst, wobei mittels des Trimstellers (16) ein Anströmquerschnitt, mit dem das Verdichterlaufrad (54) axial angeströmt wird, veränderbar ist, wobei die Turbine (22) mittels einer VTG-Vorrichtung (24) und eines Wastegates (26) regelbar ist, **dadurch gekennzeichnet, dass**
- ein maximal durch das Wastegate (26) führbarer Abgasmassenstrom zwischen 5% und 30% des maximal durch die Turbine (22) führbaren Abgasmassenstroms beträgt und
- mittels einer Steuervorrichtung (92) bei einem Betrieb der Brennkraftmaschine mit Nennleistung
- ein Teil des dann größten Abgasmassenstroms über das Wastegate (26) an der Turbine (22) vorbeigeführt wird und
- die VTG-Vorrichtung (24) in eine Regelstellung gestellt wird, in der diese den freien Strömungsquerschnitt nicht weitestmöglich freigibt.

2. Brennkraftmaschine gemäß Anspruch 1, **dadurch gekennzeichnet, dass** ein oder mehrere Bypasskanäle (96) mittels eines Drehschieberventils (102) des Wastegates (26) mehr oder weniger verschließbar sind.

3. Brennkraftmaschine gemäß Anspruch 2, **gekennzeichnet durch** eine Anordnung des Drehschieberventils (102) an einem Auslass des oder der Bypasskanäle (96).

4. Brennkraftmaschine gemäß einem der vorhergehenden Ansprüche, **gekennzeichnet durch** lediglich einen Abgasturbolader.

5. Brennkraftmaschine gemäß Anspruch 4, **gekennzeichnet durch** eine einfache Aufladung.

6. Brennkraftmaschine gemäß einem der vorhergehenden Ansprüche, **gekennzeichnet durch** einen als Dieselmotor ausgebildeten Verbrennungsmotor (10).

## Claims

1. A combustion engine with a turbocharger, which comprises a turbine (22), a radial compressor (14), in which inflow occurs in the axial direction, based on an axis of rotation of a compressor impeller (54), and outflow occurs in the radial direction, and a trim adjuster (16) for the radial compressor (14), an inflow cross-section with which the axial inflow to the compressor impeller (54) occurs being changeable by means of the trim adjuster (16), and the turbine (22) being regulatable by means of a VTG device (24) and a wastegate (26), **characterized in that**
- an exhaust gas mass flow that can maximally be guided through the wastegate (26) is between 5% and 30% of the exhaust gas mass flow that can maximally be guided through the turbine (22), and
- by means of a control device (92), during operation of the combustion engine at the rated power,
- a portion of the then greatest exhaust gas mass flow is guided past the turbine (22) via the wastegate (26), and
- the VTG device (24) is set to a control position in which it does not open the free flow cross-section as far as possible.

2. The combustion engine according to claim 1, **characterized in that** one or more bypass channels (96) can be more or less closed by means of a rotary slide valve (102) of the wastegate (26).

3. The combustion engine according to claim 2, **characterized by** an arrangement of the rotary slide valve (102) at an outlet of the bypass channel(s) (96).

4. The combustion engine according to any one of the preceding claims, **characterized by** only one turbocharger.

5. The combustion engine according to claim 4, **characterized by** a single charge.

6. The combustion engine according to any one of the preceding claims, **characterized by** an internal combustion engine (10) designed as a diesel engine.

## Revendications

1. Moteur à combustion interne avec un turbocompresseur, qui comprend une turbine (22), un compresseur radial (14), qui, considéré dans la direction axiale, est alimenté sur un axe de rotation d'une roue à aubes de compresseur (54) et est évacué dans la direction radiale, et un actionneur de compensation (16) pour le compresseur radial (14), dans lequel, au moyen de l'actionneur de compensation (16), une section transversale de flux entrant, avec laquelle la roue à aubes de compresseur (54) est alimentée axialement, peut être modifiée, dans lequel la turbine (22) peut être réglée au moyen d'un dispositif à VTG (24) et d'une soupape de décharge (26), **caractérisé en ce que**
- un flux massique des gaz d'échappement maximal pouvant être guidé à travers la soupape de décharge (26) est compris entre 5 % et 30 % du flux massique des gaz d'échappement maximal pouvant être guidé à travers la turbine (22) et
- au moyen d'un dispositif de commande (92) lors d'un fonctionnement du moteur à combustion interne à puissance nominale
- une partie du flux massique des gaz d'échappement alors la plus importante est amenée à passer par le biais de la soupape de décharge (26) à la turbine (22) et
- le dispositif à VTG (24) est réglé dans une position de réglage dans laquelle il ne libère pas le plus possible la section transversale d'écoulement libre.

2. Moteur à combustion interne selon la revendication 1, **caractérisé en ce qu'**un ou plusieurs canaux de dérivation (96) peuvent être plus ou moins fermés au moyen d'une vanne rotative (102) de la soupape de décharge (26).

3. Moteur à combustion interne selon la revendication 2, **caractérisé par** un agencement de la vanne rotative (102) au niveau d'une sortie du ou des canaux de dérivation (96).

4. Moteur à combustion interne selon l'une quelconque des revendications précédentes, **caractérisé par** un turbocompresseur uniquement.

5. Moteur à combustion interne selon la revendication 4, **caractérisé par** un chargement facile.

6. Moteur à combustion interne selon l'une quelconque des revendications précédentes, **caractérisé par** un moteur thermique (10) formé comme un moteur diesel.
